# EUROPEAN PATENT APPLICATION

(11) **EP 4 418 394 A1**
(43) Date of publication of application: **21.08.2024**
(21) Application number: 22894768.5
(22) Date of filing: 15.11.2022
(51) Int. Cl.: H01M 10/0567, H01M 10/0525

(54) **LITHIUM ION BATTERY ELECTROLYTE SOLUTION AND LITHIUM ION BATTERY**

(30) Priority: 19.11.2021 CN 202111392128
(71) Applicant: Zhejiang Research Institute of Chemical Industry Co., Ltd., Hangzhou, Zhejiang 310023 (CN); Zhejiang Zhonglan New Energy Materials Co., Ltd., Huzhou, Zhejiang 313100 (CN); Sinochem Lantian Co., Ltd., Hangzhou, Zhejiang 310051 (CN)
(72) Inventor: MA, Guoqiang, Hangzhou, Zhejiang 310023 (CN); XU, Chong, Hangzhou, Zhejiang 310023 (CN); YAN, Hong, Hangzhou, Zhejiang 310023 (CN); XU, Ning, Hangzhou, Zhejiang 310023 (CN); SHEN, Fanglie, Hangzhou, Zhejiang 310023 (CN); ZHOU, Ying, Hangzhou, Zhejiang 310023 (CN)
(74) Representative: Dehns Germany Partnerschaft mbB
(86) International application number: PCT/CN2022/131898
(87) International publication number: WO 2023/088234

(57) **Abstract**

Disclosed in the present disclosure are lithium-ion battery electrolyte and a lithium-ion battery containing electrolyte. The electrolyte includes a main lithium salt, an organic solvent, a first additive, and a second additive. The first additive is selected from difluorophosphoric acid-based lithium trifluoroborate shown in the following formula (A), wherein x+y=4, x ≥ 0, y ≥ 1, and x and y are positive integers; and the second additive is a sulfonate compound or a sulfate compound. The electrolyte of the present disclosure can effectively improve the storage and cycle performance of the battery at high voltage and high temperature, and can ensure that the battery has good low-temperature performance and rate capability.

## Description

### Technical Field

The present disclosure relates to the field of battery electrolyte, especially lithium-ion battery electrolyte, and in particular, to lithium-ion battery electrolyte containing a difluorophosphoric acid-based lithium trifluoroborate electrolyte additive.

### Background

High energy density is a development trend of lithium batteries. Common improvement methods include increasing an operating voltage or increasing the nickel content in a cathode material, but these two manners cause new challenge to the cycle performance and safety performance of a cell. Therefore, for the lithium batteries of high nickel and high voltage systems, it is particularly important to construct more stable cathode and anode interfaces and improve the high-temperature performance and cycle performance of the batteries.

Sulfonate compounds (such as PS, PST and derivatives thereof, etc.) may form a film at cathodes and anodes, so as to form a sulfonate-rich interface, such that redox reactions of solvents may be effectively suppressed on the interfaces of cathodes and anodes, thereby effectively decreasing gas production during a high-temperature storage process and improving capacity recovery rate after high-temperature storage. However, most of the sulfonate compounds are high in film-forming impedance and insufficient in low-temperature and rate performance, and due to continuous modification of the interface film during a cycle process, DCR increases rapidly, and the depletion of active lithium and the decaying of cycle life are relatively fast.

In order to solve the problems of the high film-forming impedance, low-temperature rate, and insufficient cycle performance of sulfonate compounds, in the related art, the sulfonate compound is often used with carbonate additives, sulfate additives and the like, so as to improve the anode film-forming performance, but the problems of insufficient cycle life due to the continuous growth of DCR during high-temperature storage at a high voltage and cycle processes still cannot be solved.

Sulfate compounds such as ethylenesulfate (DTD) and derivatives thereof may form an effective interface film at an anode, and film-forming impedance is relatively low, such that the cycle performance and the high-temperature storage capacity recovery rate may be improved. However, since the sulfate compounds are relatively weak in film-forming effect at the cathode interface, stored produced gas cannot be effectively suppressed. Especially at the high voltage, the protection of a cathode interface film is insufficient, and side reactions of a cathode electrolyte interface cannot be effectively suppressed, such that improvement of the battery performance is limited, and the storage and cycling performance at high temperature and high voltage is relatively weak.

In the related art, an effectively protective film is formed at the cathode surface by using a cathode film-forming additive, so as to suppress side reactions between electrolyte and the cathode interface, and improving the stability of the interface, thereby improving the storage and cycle stability at high temperature and high voltage. However, most of the cathode film-forming additives such as 1,3-propane sultone (PS), prop-1-ene-1,3-sulton (PST), etc. will lead to high interface impedance, which continuously increases during the storage and cycle processes, seriously affecting the low-temperature performance, rate capability and long-term cyclic stability of the batteries.

Therefore, there is a need to seek a new electrolyte additive or electrolyte additive composition that improves the high-temperature storage and high-temperature cycle performance while the low-temperature and rate performance is improved at high-voltage and high-temperature environments, and suppresses impedance increase during the storage and cycle processes, so as to prolong the cycle life of the cell.

### Summary

In order to solve the above technical problems, the present disclosure provides lithium-ion battery electrolyte and a lithium-ion battery, which improve the storage and cycle performance of batteries at high voltage and high temperature while the good low-temperature and rate performance is guaranteed.

The objective of the present disclosure is implemented by means of the following technical solutions.

Lithium-ion battery electrolyte includes a main lithium salt, an organic solvent, a first additive, and a second additive.

The first additive is selected from difluorophosphoric acid-based lithium trifluoroborate shown in the following formula (A):

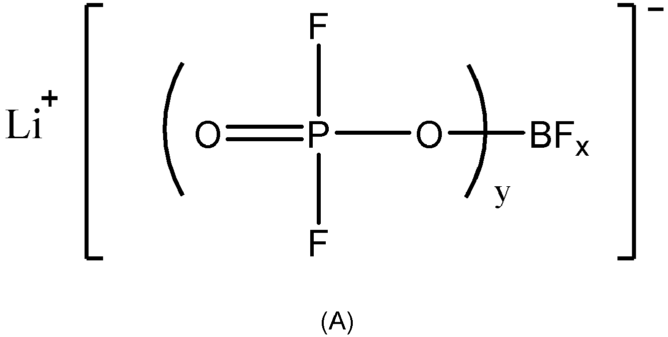

In the formula, x+y = 4, x≥0, y≥1, and x and y are cathode integers.

The second additive is a sulfonate compound or a sulfate compound, the sulfonate compound comprises: a chain sulfonate compound shown in the following formula (B-1) and/or a cyclic sulfonate compound shown in the following formula (B-2); the sulfate compound comprises: a chain sulfate compound shown in the following formula (C-1) and/or a cyclic sulfate compound shown in the following formula (C-2).

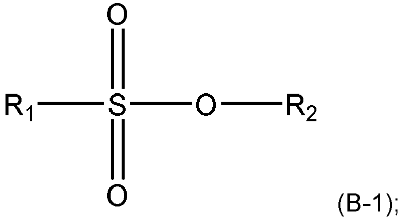

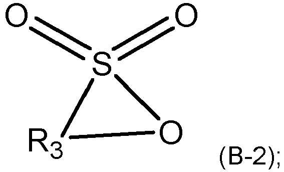

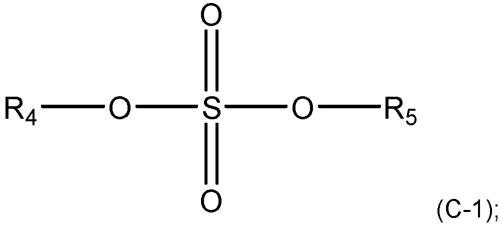

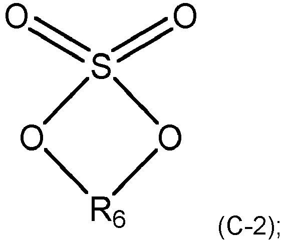

R₁, R₂, R₄, and R₅ are independently selected from at least one of C1-C6 alkyl, C1-C6 haloalkyl, C2-C6 alkenyl, C2-C6 haloalkenyl, C2-C6 alkynyl, or C2-C6 haloalkynyl.

R₃ and R₆ are independently selected from at least one of C1-C6 alkylidene, C1-C6 haloalkylidene, C2-C6 alkenylidene, or C2-C6 haloalkenylidene.

Further, R₁, R₂, R₄, and R₅ are independently selected from at least one of C1-C3 alkyl, C1-C3 haloalkyl, C2-C3 alkenyl, C2-C3 haloalkenyl, C2-C3 alkynyl, or C2-C3 haloalkynyl.

R₃ and R₆ are independently selected from at least one of C1-C3 alkylidene, C1-C3 haloalkylidene, C2-C3 alkenylidene, or C2-C3 haloalkenylidene.

More preferably, the first additive is selected from at least one of structures shown below:

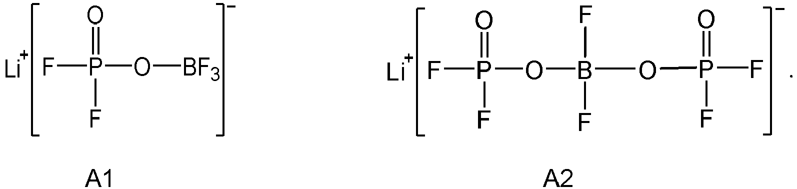

The second additive is selected from at least one of structures shown below:

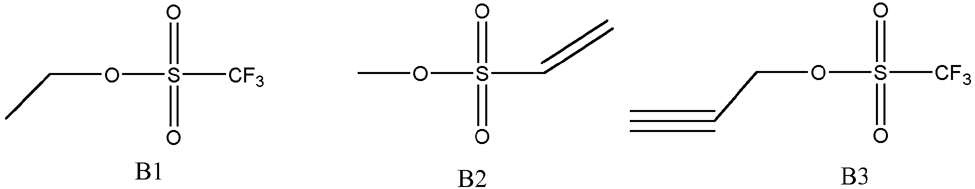

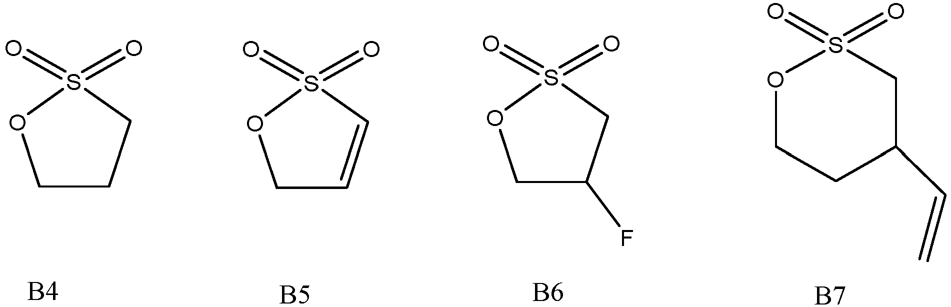

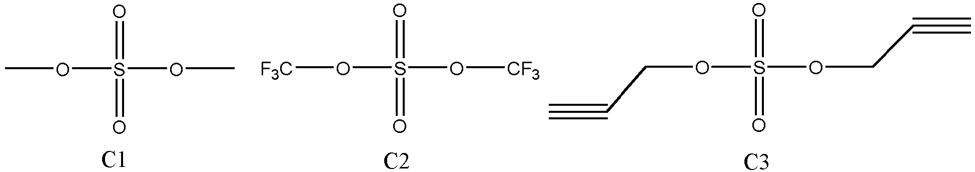

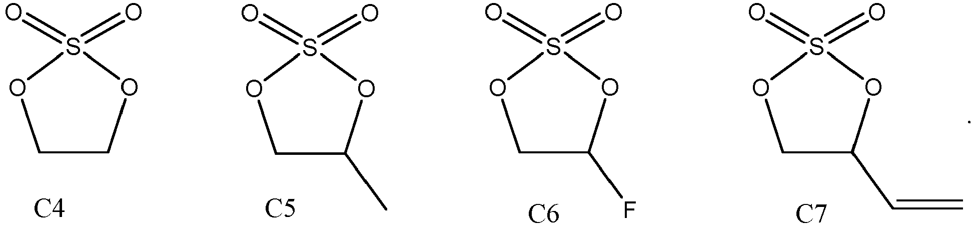

In the electrolyte described in the present disclosure, wherein a use amount of the first additive accounts for 0.1-10.0% of total mass of the electrolyte, and a use amount of the second additive accounts for 0.05-5.0% of the total mass of the electrolyte. Preferably, a use amount of the first additive accounts for 0.1-2.0% of total mass of the electrolyte, and a use amount of the second additive accounts for 0.1-2.0% of the total mass of the electrolyte.

In order to improve the overall performance of a battery, further the electrolyte further includes a third additive. The third additive is selected from at least one of a carbonate additive and derivatives thereof, or a fluorine-containing lithium salt additive, and a use amount accounts for 0.01-5.0% of total mass of the electrolyte. Preferably, the third additive is selected from at least one of Vinylene Carbonate, Fluoroethylene Carbonate, lithium difluorophosphate, lithium bis(fluorosulfonyl)imide, lithium bis(trifluoromethanesulphonyl)imide, Lithium Difluorobis(oxalato)phosphate, lithium difluoro(oxalato)borate, or lithium tetrafluoroborate, and the use amount accounts for 0.1-5.0% of the total mass of the electrolyte; and the third additive is different from the main lithium salt.

A commonly-used main lithium salt in the electrolyte is selected as the main lithium salt. Preferably, the main lithium salt is selected from at least one of Lithium Hexafluorophosphate, lithium bis(fluorosulfonyl)imide, or lithium bis(trifluoromethanesulphonyl)imide, and a molar concentration in the electrolyte is 0.4-1.6 mol/L. More preferably, the main lithium salt is the Lithium Hexafluorophosphate, and the molar concentration in the electrolyte is 0.6-1.2 mol/L.

In the present disclosure, a commonly-used non-aqueous solvent in the electrolyte is selected as the organic solvent. Preferably, the organic solvent is selected from the organic solvent is selected from at least one of a C3-C6 carbonate compound, a C3-C8 carboxylic ester compound, a sulfone compound or an ether compound.

Further, the C3-C6 carbonate compound is selected from at least one of Ethylene Carbonate, propylene carbonate, butene carbonate, dimethyl carbonate, Ethyl Methyl Carbonate, Diethyl Carbonate, dipropyl carbonate, methyl propyl carbonate, ethyl propyl carbonate, Fluoroethylene Carbonate, or di-fluoro ethylene carbonate.

The C3-C8 carboxylic ester compound is selected from at least one of γ-butyrolactone, methyl acetate, methyl propionate, methyl butyrate, ethyl acetate, ethyl propionate, ethyl butyrate, propyl acetate, propyl propionate, ethyl fluoroacetate, or 2,2-difluoroethyl acetate.

The sulfone compound is selected from at least one of sulfolane, dimethyl sulfoxide, dimethyl sulfone, or diethyl sulfone.

The ether compound is selected from at least one of triethylene glycol dimethyl ether, tetraethylene glycol dimethyl ether, or 1,1,2,2-tetrafluoroethyl-2,2,3,3-tetrafluoropropylether.

The present disclosure further provides a lithium-ion battery, including a cathode, an anode, a diaphragm, and the lithium-ion battery electrolyte described in any one of the above.

An active material of the cathode is selected from a nickel-cobalt-manganese ternary material, a nickel-cobalt-aluminum ternary material, a lithium cobaltate material, or a lithium iron phosphate material. The nickel-cobalt-manganese ternary material is Li(NiₓCo_{y}Mn_{z})O₂, wherein x≥0.5, y>0, z>0, and x+y+z=1. The nickel-cobalt-aluminum ternary material is Li(NiₓCo_{y}Al_{z})O₂, wherein x≥0.8, y>0, z>0, and x+y+z = 1.

An active material of the anode is graphite, silicon carbon, silicon oxide, silicon, tin, lithium, or a composite material thereof.

Compared with the related art, the present disclosure has the following beneficial effects.

The first additive of the present disclosure is a new lithium salt additive, which may form a film at the cathodes and anodes, has low film-forming impedance, and has a modification effect on an interface film, such that the stability of cathode and anode interfaces is improved, and gas production during storage and cycle processes of a cell at high temperature and high voltage can be effectively suppressed.

When the second additive is the sulfonate compound, through the synergistic effect of the first additive and the sulfonate compound, the problems of fast DCR increase and insufficient performance during high-temperature storage and high-temperature cycle processes of the sulfonate compound may be overcome. Therefore, the storage performance and cycle performance of the battery at high voltage and high temperature are effectively improved, and the cycle life of the cell is prolonged, as well as good low-temperature and rate capability is guaranteed.

When the second additive is the sulfate compound, through the synergistic effect of the first additive and the sulfate compound, the problems of insufficient cathode protection, and serious gas production at high temperature and high voltage of the sulfonate compound may be overcome, such that the storage performance and cycle performance of the battery at high voltage and high temperature are effectively improved, and it ensures that the battery has good low-temperature and rate capability.

### Detailed Description of the Embodiments

The present disclosure is further described below with reference to specific embodiments, but the disclosure is not limited to these specific embodiments. It should be recognized by those skilled in the art that, the present disclosure covers all alternatives, improvements and equivalents that may be included within the scope of the claims.

### I. Preparation of electrolyte

Preparation of basic electrolyte: in a glove box (moisture content < 5ppm, and oxygen content < 10ppm) filled with argon, Ethylene Carbonate (EC), Ethyl Methyl Carbonate (EMC), and Diethyl Carbonate (DEC) were well mixed according to a mass ratio being EC:EMC:DEC = 3:5:2; and Lithium Hexafluorophosphate (LiPF₆) was slowly added to the mixed solution until a molar concentration of the LiPF₆ was 1.2 mol/L, so the basic electrolyte was obtained.

Embodiment 1: in the basic electrolyte, a first additive A1 with mass content of 0.5% and a second additive B1 with mass content of 1.0% were added to obtain electrolyte of this embodiment.

Embodiment 2: in the basic electrolyte, the first additive A1 with mass content of 1.0% and the second additive B1 with mass content of 1.0% were added to obtain the electrolyte of this embodiment.

Embodiment 3: in the basic electrolyte, the first additive A1 with mass content of 1.0% and the second additive B1 with mass content of 2.0% were added to obtain the electrolyte of this embodiment.

Embodiment 4: in the basic electrolyte, the first additive A1 with mass content of 1.0%, the second additive B1 with mass content of 1.0%, and Vinylene Carbonate(VC) with mass content of 1.0% were added to obtain the electrolyte of this embodiment.

Embodiment 5: in the basic electrolyte, a first additive A2 with mass content of 1.0%, the second additive B1 with mass content of 1.0%, and the Vinylene Carbonate(VC) with mass content of 1.0% were added to obtain the electrolyte of this embodiment.

Embodiment 6: in the basic electrolyte, the first additive A2 with mass content of 1.0% and a second additive B4 with mass content of 1.0% were added to obtain the electrolyte of this embodiment.

Embodiment 7: in the basic electrolyte, the first additive A2 with mass content of 1.0%, the second additive B4 with the mass content of 1.0%, and Fluoroethylene Carbonate(FEC) with mass content of 1.0% were added to obtain the electrolyte of this embodiment.

Embodiment 8: in the basic electrolyte, the first additive A2 with the mass content of 1.0%, a second additive B5 with mass content of 1.0%, and Lithium Difluorobis(oxalato)phosphate(LiDFOP) with mass content of 1.0% were added to obtain the electrolyte of this embodiment.

Embodiment 9: in the basic electrolyte, the first additive A1 with the mass content of 0.5%, the first additive A2 with the mass content of 0.5%, the second additive B1 with the mass content of 1.0%, and the Vinylene Carbonate(VC) with the mass content of 1.0% were added to obtain the electrolyte of this embodiment.

Embodiment 10: in the basic electrolyte, the first additive A1 with the mass content of 0.5%, the first additive A2 with the mass content of 0.5%, the second additive B4 with the mass content of 1.0%, and the Fluoroethylene Carbonate(FEC) with the mass content of 1.0% were added to obtain the electrolyte of this embodiment.

Embodiment 11: in the basic electrolyte, the first additive A1 with the mass content of 0.5%, the first additive A2 with the mass content of 0.5%, the second additive B5 with the mass content of 1.0%, and the Lithium Difluorobis(oxalato)phosphate(LiDFOP) with the mass content of 1.0% were added to obtain the electrolyte of this embodiment.

Embodiment 12: in the basic electrolyte, the first additive A1 with the mass content of 0.5% and a second additive C2 with mass content of 1.0% were added to obtain the electrolyte of this embodiment.

Embodiment 13: in the basic electrolyte, the first additive A1 with the mass content of 1.0% and the second additive C2 with the mass content of 1.0% were added to obtain the electrolyte of this embodiment.

Embodiment 14: in the basic electrolyte, the first additive A1 with the mass content of 1.0% and the second additive C2 with the mass content of 2.0% were added to obtain the electrolyte of this embodiment.

Embodiment 15: in the basic electrolyte, the first additive A1 with the mass content of 1.0%, the second additive C2 with the mass content of 1.0%, and the Vinylene Carbonate(VC) with the mass content of 1.0% were added to obtain the electrolyte of this embodiment.

Embodiment 16: in the basic electrolyte, the first additive A2 with the mass content of 1.0%, the second additive C2 with the mass content of 1.0%, and the Vinylene Carbonate(VC) with the mass content of 1.0% were added to obtain the electrolyte of this embodiment.

Embodiment 17: in the basic electrolyte, the first additive A2 with the mass content of 1.0% and a second additive C4 with mass content of 1.0% were added to obtain electrolyte of this embodiment.

Embodiment 18: in the basic electrolyte, the first additive A2 with the mass content of 1.0%, the second additive C4 with the mass content of 1.0%, and the Fluoroethylene Carbonate(FEC) with the mass content of 1.0% were added to obtain the electrolyte of this embodiment.

Embodiment 19: in the basic electrolyte, the first additive A2 with the mass content of 1.0%, a second additive C5 with mass content of 1.0%, and the Lithium Difluorobis(oxalato)phosphate(LiDFOP) with the mass content of 1.0% were added to obtain the electrolyte of this embodiment.

Embodiment 20: in the basic electrolyte, the first additive A1 with the mass content of 0.5%, the first additive A2 with the mass content of 0.5%, the second additive C2 with the mass content of 1.0%, and the Vinylene Carbonate(VC) with the mass content of 1.0% were added to obtain the electrolyte of this embodiment.

Embodiment 21: in the basic electrolyte, the first additive A1 with the mass content of 0.5%, the first additive A2 with the mass content of 0.5%, the second additive C4 with the mass content of 1.0%, and the Fluoroethylene Carbonate(FEC) with the mass content of 1.0% were added to obtain the electrolyte of this embodiment.

Embodiment 22: in the basic electrolyte, the first additive A1 with the mass content of 0.5%, the first additive A2 with the mass content of 0.5%, the second additive C5 with the mass content of 1.0%, and the Lithium Difluorobis(oxalato)phosphate(LiDFOP) with the mass content of 1.0% were added to obtain the electrolyte of this embodiment.

Comparative example 1: this comparative example is consistent with the basic electrolyte.

Comparative example 2: in the basic electrolyte, a third additive Fluoroethylene Carbonate(FEC) with mass content of 1.0% was added only to obtain the electrolyte of this comparative example.

Comparative example 3: in the basic electrolyte, the second additive B4 with the mass content of 1.0% was added only to obtain the electrolyte of this comparative example.

Comparative example 4: in the basic electrolyte, the first additive A2 with the mass content of 1.0% was added only to obtain the electrolyte of this comparative example.

Comparative example 5: in the basic electrolyte, the second additive B4 with the mass content of 1.0% and the third additive Fluoroethylene Carbonate(FEC) with the mass content of 1.0% were added to obtain the electrolyte of this comparative example.

Comparative example 6: in the basic electrolyte, the first additive A2 with the mass content of 1.0% and the third additive Fluoroethylene Carbonate(FEC) with the mass content of 1.0% were added to obtain the electrolyte of this comparative example.

Comparative example 7: in the basic electrolyte, the second additive C4 with the mass content of 1.0% was added only to obtain the electrolyte of this comparative example.

Comparative example 8: in the basic electrolyte, the second additive C4 with the mass content of 1.0% and the third additive Fluoroethylene Carbonate(FEC) with the mass content of 1.0% were added to obtain the electrolyte of this comparative example.

### II. Performance test

The lithium-ion battery electrolyte of the embodiments and comparative example was prepared into soft-pack lithium-ion power batteries with a capacity of 1500mAh, respectively; the lithium-ion power battery included a cathode plate, an anode plate, a diaphragm, the electrolyte, and battery accessories; an active material of the cathode was a nickel-cobalt-manganese ternary material, a nickel-cobalt-aluminum ternary material, a lithium cobaltate material, or a lithium iron phosphate material; and the active material of the cathode was a high nickel ternary cathode LiNi_{0.83}Co_{0.07}Mn_{0.2}O₂, and an active material of the anode was high-capacity graphite. A preparation process included: winding the cathode plate, the diaphragm, and the anode plate together to form a coil core, sealing same by using an aluminum plastic film, then performing baking to cause electrode moisture to meet requirements, performing electrolyte injection on a baked cell, and obtaining a finished soft pack cell through standing, formation, capacity sorting, and aging processes.

A performance test was performed on the lithium-ion power battery (soft pack cell) obtained through preparation. Specific test items and methods were shown as follows.
(1) Battery discharge DCR test: regulating the State Of Charge (SOC) of the cell to 50% with a 0.2C constant current, allowing same to stand for 30 min, and testing an open circuit voltage OCV1 after standing ended; performing discharging for 10s according to a maximum pulse current (311(A)) specified by a battery manufacturer, and collecting a voltage OCV2 at the moment of termination of high current discharge; and calculating DCR according to a formula DCIR = (OCV1-OCV2)/3C.
(2) 60°C high-temperature storage test: charging the battery to 100%SOC, storing the battery for 28 days in a 60±2 °C oven, and testing volumes before and after storage, so as to obtain a volume expansion rate of the single battery at 60°C before and after storage; at room temperature, discharging the single battery to a final voltage with a 0.5C current; and repeating the above operation for 2 times, using a second discharge capacity as a recovery capacity after the end of storage, calculating a percentage ratio of the recovery capacity to an initial capacity, and recording the percentage ratio as a capacity recovery rate.
(3) 45 °C high-temperature cycle test: cycling the battery in a 45±1 °C oven with a 1C/1C charging and discharging current, calculating the discharge capacity of each cycle, performing cycling to 500 cycles, stopping cycling, testing a DCR value after the test ended, and calculating a capacity retention rate and a DCR growth rate after cycling.

Test results were shown in Table 1.

**Table 1 Battery performance test result**

| Embodiment/co mparative example | First additive | Second additive | Third additi ve | 25 °C initial disch arge DCR/ mΩ | 28 days of storage at a high temperature of 60 °C | | 500 cycles at 1C/1C and a high temperature of 45 °C | |
|---|---|---|---|---|---|---|---|---|
| | | | | | Capa city recov ery rate % | Volum e expan sion rate% | Capa city retent ion rate % | Disch arge DCR growt h rate % |
| Embodiment 1 | 0.5%A1 | 1.0%B1 | / | 42.1 | 91.8 | 15 | 88.5 | 26 |
| Embodiment 2 | 1.0%A1 | 1.0%B1 | / | 42.0 | 92.4 | 13 | 89.0 | 24 |
| Embodiment 3 | 1.0%A1 | 2.0%B1 | / | 43.2 | 91.6 | 11 | 88.9 | 29 |
| Embodiment 4 | 1.0%A1 | 1.0%B1 | 1.0% VC | 42.5 | 93.0 | 12 | 91.5 | 20 |
| Embodiment 5 | 1.0%A2 | 1.0%B1 | 1.0% VC | 42.1 | 93.4 | 13 | 91.8 | 22 |
| Embodiment 6 | 1.0%A2 | 1.0%B4 | / | 42.0 | 92.5 | 12 | 90.9 | 25 |
| Embodiment 7 | 1.0%A2 | 1.0%B4 | 1.0% FEC | 41.8 | 93.2 | 10 | 92.5 | 20 |
| Embodiment 8 | 1.0%A2 | 1.0%B5 | 1.0% LiDF OP | 41.6 | 92.8 | 12 | 92.1 | 23 |
| Embodiment 9 | 0.5%A1 + 0.5%A2 | 1.0%B1 | 1.0% VC | 42.0 | 92.5 | 13 | 91.8 | 22 |
| Embodiment 10 | 0.5%A1+ 0.5%A2 | 1.0%B4 | 1.0% FEC | 41.6 | 93.1 | 10 | 92.5 | 20 |
| Embodiment 11 | 0.5%A1+ 0.5%A2 | 1.0%B5 | 1.0% LiDF OP | 41.6 | 92.9 | 10 | 92.6 | 23 |
| Embodiment 12 | 0.5%A1 | 1.0%C2 | / | 38.8 | 91.5 | 19 | 88.6 | 27 |
| Embodiment 13 | 1.0%A1 | 1.0%C2 | / | 39.2 | 92.4 | 15 | 89.0 | 25 |
| Embodiment 14 | 1.0%A1 | 2.0%C2 | / | 40 | 91.6 | 16 | 88.5 | 28 |
| Embodiment 15 | 1.0%A1 | 1.0%C2 | 1.0% VC | 39.4 | 92.5 | 13 | 91.5 | 22 |
| Embodiment 16 | 1.0%A2 | 1.0%C2 | 1.0% VC | 40.1 | 92.4 | 13 | 91.8 | 22 |
| Embodiment 17 | 1.0%A2 | 1.0%C4 | / | 40.0 | 92.5 | 15 | 90.9 | 23 |
| Embodiment 18 | 1.0%A2 | 1.0%C4 | 1.0% FEC | 40.0 | 93.2 | 13 | 92.5 | 21 |
| Embodiment 19 | 1.0%A2 | 1.0%C5 | 1.0% LiDF OP | 39.2 | 92.8 | 12 | 92.1 | 23 |
| Embodiment 20 | 0.5%A1+ 0.5%A2 | 1.0%C2 | 1.0% VC | 40.0 | 92.5 | 13 | 91.8 | 22 |
| Embodiment 21 | 0.5%A1 + 0.5%A2 | 1.0%C4 | 1.0% FEC | 39.2 | 93.1 | 10 | 92.5 | 23 |
| Embodiment 22 | 0.5%A1 + 0.5%A2 | 1.0%C5 | 1.0% LiDF OP | 39.6 | 92.9 | 10 | 92.6 | 22 |
| Comparative example 1 | / | / | / | 40.5 | 85.0 | 36 | 78 | 80 |
| Comparative example 2 | / | / | 1.0% FEC | 39.3 | 87.9 | 30 | 83.5 | 45 |
| Comparative example 3 | / | 1.0%B4 | / | 42.8 | 88.2 | 20 | 82.6 | 49 |
| Comparative example 4 | 1.0%A2 | / | / | 40.1 | 87.6 | 25 | 84.2 | 35 |
| Comparative example 5 | / | 1.0%B4 | 1.0% FEC | 41.5 | 89.9 | 22 | 85.2 | 38 |
| Comparative example 6 | 1.0%A2 | / | 1.0% FEC | 40.2 | 89.3 | 26 | 86.1 | 32 |
| Comparative example 7 | / | 1.0%C4 | / | 42.8 | 88.2 | 35 | 82.6 | 50 |
| Comparative example 8 | / | 1.0%C4 | 1.0% FEC | 41.5 | 89.9 | 32 | 85.2 | 40 |

Comparing Embodiment 6 with Comparative examples 3 and 4 in Table 1, it might be found that, by using the first additive and the second additive together, compared to using the first additive or the second additive alone, a high-temperature storage capacity recovery rate, a gas production rate, and the long-term stability of a high-temperature cycle were significantly improved. Comparing Embodiment 2 with Embodiment 4 and Embodiment 6 with Embodiment 7, on the basis of the combined use of the first additive and the second additive, the third additive was added, such that high-temperature storage and high-temperature cyclic stability were further improved.

Comparing Embodiment 17 with Comparative examples 4 and 7 in Table 1, it might be found that, by using the first additive and the second additive together, compared to using the first additive or the second additive alone, the high-temperature storage volume expansion rate, the capacity recovery rate, and the high-temperature cyclic stability were effectively improved. Comparing Embodiment 13 with Embodiment 15 and Embodiment 17 with Embodiment 18, on the basis of the combined use of the first additive and the second additive, the third additive was added, such that high-temperature storage and high-temperature cyclic stability were further improved, and at the same time, initial impedance was not affected, thereby guaranteeing low-temperature performance and rate capability.

In general, compared to the single use of the first additive, the second additive, or the third additive, and two combinations of the three additives, the combined use of the three additives has the optimal effect. Through the combined use of the three additives, the anode effects of inferior functions were effectively suppressed while respective superior functions were achieved, thereby realizing the synergistic effect among the additives and effectively improving the overall performance of the battery.

## Claims

1. Lithium-ion battery electrolyte, comprising a main lithium salt and an organic solvent, wherein the electrolyte further comprises:
a first additive, the first additive selected from difluorophosphoric acid-based lithium trifluoroborate shown in the following formula (A): 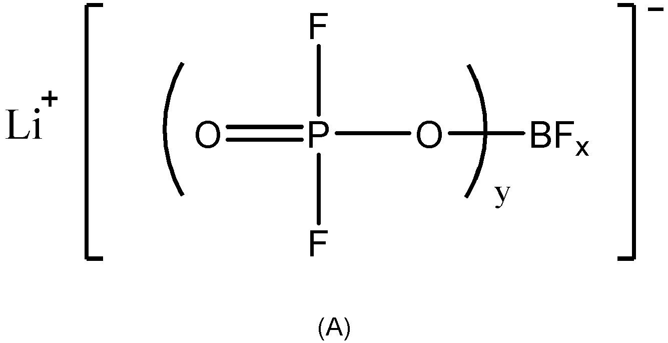
in the formula, x+y=4, x≥0, y≥1, and x and y are positive integers; and
a second additive, wherein the second additive is a sulfonate compound or a sulfate compound, the sulfonate compound comprises: a chain sulfonate compound shown in the following formula (B-1) and/or a cyclic sulfonate compound shown in the following formula (B-2); the sulfate compound comprises: a chain sulfate compound shown in the following formula (C-1) and/or a cyclic sulfate compound shown in the following formula (C-2), 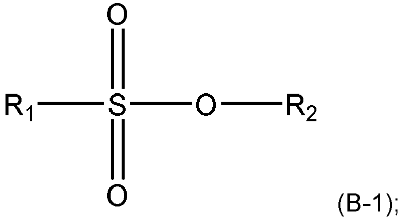 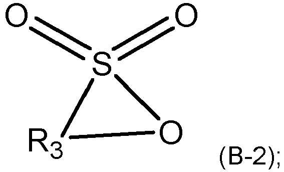 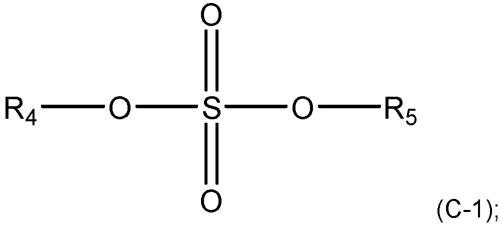 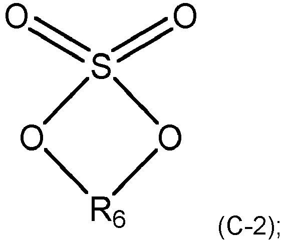
wherein R₁, R₂, R₄, and R₅ are independently selected from at least one of C1-C6 alkyl, C1-C6 haloalkyl, C2-C6 alkenyl, C2-C6 haloalkenyl, C2-C6 alkynyl, or C2-C6 haloalkynyl; and
R₃ and R₆ are independently selected from at least one of C1-C6 alkylidene, C1-C6 haloalkylidene, C2-C6 alkenylidene, or C2-C6 haloalkenylidene.

2. The lithium-ion battery electrolyte according to claim 1, wherein
R₁, R₂, R₄, and R₅ are independently selected from at least one of C1-C3 alkyl, C1-C3 haloalkyl, C2-C3 alkenyl, C2-C3 haloalkenyl, C2-C3 alkynyl, or C2-C3 haloalkynyl; and
R₃ and R₆ are independently selected from at least one of C1-C3 alkylidene, C1-C3 haloalkylidene, C2-C3 alkenylidene, or C2-C3 haloalkenylidene.

3. The lithium-ion battery electrolyte according to claim 1, wherein
the first additive is selected from at least one of structures shown below: 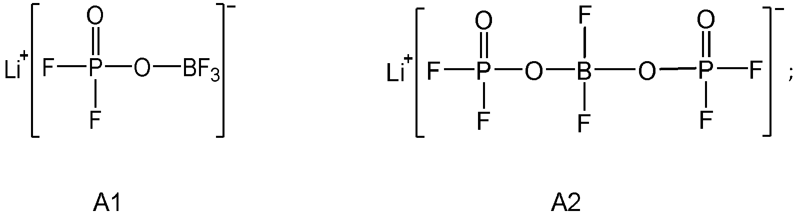
the second additive is selected from at least one of structures shown below:

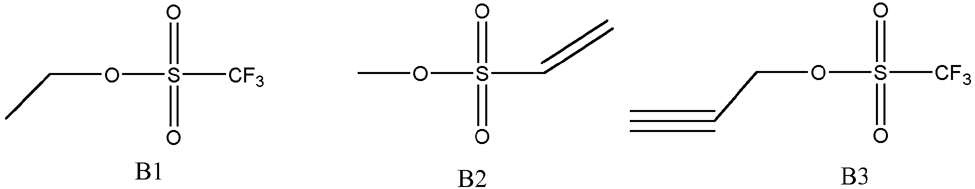

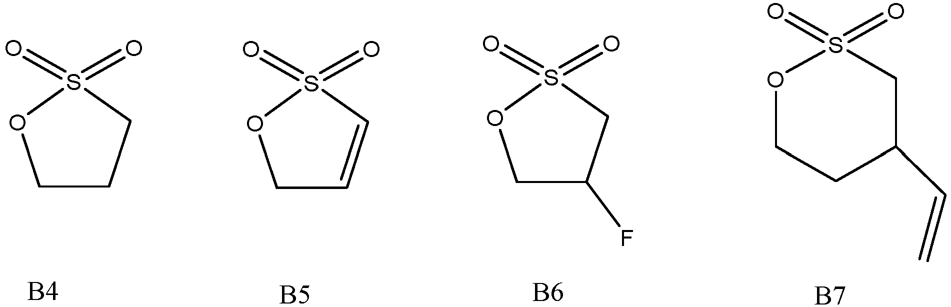

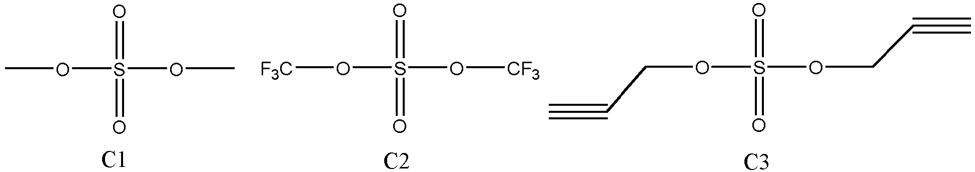

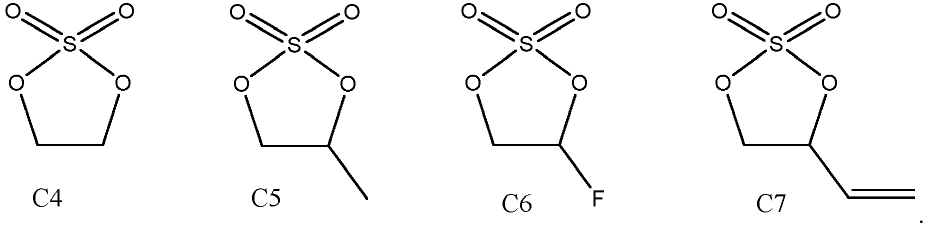

4. The lithium-ion battery electrolyte according to claim 1, wherein a use amount of the first additive accounts for 0.1-10.0% of total mass of the electrolyte, and a use amount of the second additive accounts for 0.05-5.0% of the total mass of the electrolyte.

5. The lithium-ion battery electrolyte according to claim 1, wherein a use amount of the first additive accounts for 0.1-2.0% of total mass of the electrolyte, and a use amount of the second additive accounts for 0.1-2.0% of the total mass of the electrolyte.

6. The lithium-ion battery electrolyte according to claim 1, further comprising a third additive, wherein the third additive is selected from at least one of a carbonate additive and derivatives thereof and a fluorine-containing lithium salt additive, and a use amount accounts for 0.01-5.0% of total mass of the electrolyte.

7. The lithium-ion battery electrolyte according to claim 6, wherein the third additive is selected from at least one of Vinylene Carbonate, Fluoroethylene Carbonate, lithium difluorophosphate, lithium bis(fluorosulfonyl)imide, lithium bis(trifluoromethanesulphonyl)imide, Lithium Difluorobis(oxalato)phosphate, lithium difluoro(oxalato)borate, or lithium tetrafluoroborate, and the use amount accounts for 0.1-5.0% of the total mass of the electrolyte; and the third additive is different from the main lithium salt.

8. The lithium-ion battery electrolyte according to claim 1, wherein the main lithium salt is selected from at least one of Lithium Hexafluorophosphate, lithium bis(fluorosulfonyl)imide, or lithium bis(trifluoromethanesulphonyl)imide, and a molar concentration in the electrolyte is 0.4-1.6 mol/L; and
the organic solvent is selected from at least one of a C3-C6 carbonate compound, a C3-C8 carboxylic ester compound, a sulfone compound or an ether compound.

9. The lithium-ion battery electrolyte according to claim 8, wherein the main lithium salt is the Lithium Hexafluorophosphate, and the molar concentration in the electrolyte is 0.6-1.2 mol/L;
the C3-C6 carbonate compound is selected from at least one of Ethylene Carbonate, propylene carbonate, butene carbonate, dimethyl carbonate, Ethyl Methyl Carbonate, Diethyl Carbonate, dipropyl carbonate, methyl propyl carbonate, ethyl propyl carbonate, Fluoroethylene Carbonate, or di-fluoro ethylene carbonate;
the C3-C8 carboxylic ester compound is selected from at least one of γ-butyrolactone, methyl acetate, methyl propionate, methyl butyrate, ethyl acetate, ethyl propionate, ethyl butyrate, propyl acetate, propyl propionate, ethyl fluoroacetate, or 2,2-difluoroethyl acetate;
the sulfone compound is selected from at least one of sulfolane, dimethyl sulfoxide, dimethyl sulfone, or diethyl sulfone; and
the ether compound is selected from at least one of triethylene glycol dimethyl ether, tetraethylene glycol dimethyl ether, or 1,1,2,2-tetrafluoroethyl-2,2,3,3-tetrafluoropropylether.

10. A lithium-ion battery, comprising a cathode, an anode, and a diaphragm, wherein the lithium-ion battery further comprises the lithium-ion battery electrolyte according to any one of claims 1 to 9.
